# EUROPEAN PATENT SPECIFICATION

(11) **EP 3 931 931 B1**
(45) Date of publication and mention of the grant of the patent: **10.01.2024**
(21) Application number: 19709850.2
(22) Date of filing: 26.02.2019
(51) Int. Cl.: H02J 3/18, H02J 3/32, H02M 7/483, H02M 1/32

(54) **STATCOM WITH INTEGRATED ENERGY STORAGE**
STATCOM MIT INTEGRIERTER ENERGIESPEICHERUNG
STATCOM COMPORTANT UN STOCKAGE D'ÉNERGIE INTÉGRÉ

(43) Date of publication of application: 05.01.2022
(73) Proprietor: Hitachi Energy Ltd, 8050 Zürich (CH)
(72) Inventor: BERTOLDI, Federico, 38122 Trento (IT); IBANEZ, Marta, 5415 Nussbaumen (CH); BAI, Haofeng, 72226 Västerås (SE); MOHANAVEERAMANI, Aravind, 72219 Västerås (SE); NAMI, Alireza, 722 19 Västerås (SE)
(74) Representative: AWA Sweden AB
(86) International application number: PCT/EP2019/054717
(87) International publication number: WO 2020/173550

(56) References cited:
- WO-A1-2010/040388
- WO-A1-2016/119820
- WO-A1-2017/140357

## Description

### TECHNICAL FIELD

The present disclosure relates to a STATCOM arrangement comprising a STATCOM power electronic converter and an Energy Storage (ES) integrated with said STATCOM.

### BACKGROUND

Future grid codes are tightening the requirements on the generating plants in term of both fault and frequency support. Grid connected Energy Storage (ES) solutions are increasingly adopted to compensate for the decreased stored inertia resulting from the substitution of traditional power plants (synchronous generators) with renewable generation installations (using power electronic interfaces). The requirements for the provision of virtual inertia have been proposed by recent Implementation Guideline Documents (IGDs) by ENTSO-E. One of the requirements is the provision for additional active power of about 0.3 p.u. (per unit) to emulate inertial response in face of a frequency event in the grid.

Typically, Static Synchronous Compensators (STATCOM) are used for voltage support during faults. However, state of the art solutions are falling short under the requirements of the new grid codes, which stipulate that the STATCOMs have to be able to deal with 100% negative sequence compensation in power balancer mode, and fault support with a ratio between positive and negative sequence voltage equal to one.

A way of providing both reactive and active power support may be to have a STATCOM and an energy storage connected through a converter, each separately connected to the grid. However, the conversion system for the connection of the energy storage would require additional components such as a Direct Current (DC) to Alternating Current (AC), DC/AC, converter (a two-level (2L) converter in the simplest case), line reactors, output filter etc. Furthermore, the voltage string of the energy storage can only be reduced by stepping down the voltage with a transformer at the AC side, or by DC/DC conversion on the DC side.

WO 2012/156261 discloses integration of an ES in a STATCOM for sharing the same power electronics circuitry for both active and reactive power support. The ES is integrated in each converter cell via a respective DC-DC converter.

In an attempt to come up with new STATCOM solutions with reduced losses, a family of new Chain Link STATCOM topologies has been proposed in WO 2017/140357, where converter arms are dynamically connected to and disconnected from AC phases during operation.

WO 2016/119820 A1 discloses a multilevel power converter connected to an AC network and a load, with the converter comprising at least a first and a second phase leg, each phase leg comprising a plurality of cascaded chain link connected cells, each cell comprising a DC link capacitor.

WO 2016/119820 A1 further discloses that at least one cell in each phase leg comprises, in addition to the DC link capacitor, an energy storage element configured for absorbing and supplying active power in the phase leg for converter internal DC link capacitor voltage balancing when compensating for unbalances between the phases of the network or the load without inducing any extra net active power exchange between the converter and the network.

### SUMMARY

A common property shared between the different topologies proposed in WO 2017/140357, as well as other contemplated topologies for the new grid codes where the number of chain-link arms exceed the number of phases of the grid, is that not all the chain-link arms are in operation all the time.

The inventors have now realized that a chain-link arm which during any time period is not in operation for STATCOM operation can be used as power electronic interface during said time period for an ES which is thus integrated with the STATCOM.

Similarly, also for regular converter topologies where all converter arms are the whole time used for STATCOM operation, not all cells in the arms are used the whole time, allowing different chain-link parts of the converter arms to be used as power electronic interface during time periods when they are not used for STATCOM operation. A chain-link is herein defined as a plurality of series connected converter cells, which may constitute a whole converter arm or a part thereof.

According to an aspect of the present invention, there is provided a STATCOM arrangement. The STATCOM arrangement comprises a STATCOM configured to be connected to a three-phase AC grid. The STATCOM comprises a plurality of converter arms, each converter arm comprising a plurality of series connected converter cells. The STATCOM arrangement also comprises an Energy Storage System (ESS) comprising an energy storage (ES) and energy storage switches enabling the ES to be connected to the grid via the converter arms. The plurality of converter arms comprises a plurality of intermittently usable chain-links of the series connected converter cells. Each of the intermittently usable chain-links is configured to be used for STATCOM operation during a time period within a fundamental operation cycle of a line voltage of the AC grid and configured not be used for the STATCOM operation during another time period within said fundamental operation cycle. The energy storage switches enable the ES to at any point in time be connected via one of the intermittently usable chain-links which is not used for the STATCOM operation at said time point.

According to another aspect of the present invention, there is provided a method of connecting an ES to a three-phase AC grid via a STATCOM, the STATCOM comprising a plurality of converter arms, each converter arm comprising a plurality of series connected converter cells. The method comprises, over a fundamental operation cycle of a line voltage of the AC grid, by means of energy storage switches, in sequence connecting the ES to the AC grid via each of a plurality of intermittently used chain-links of the series connected converter cells of the plurality of converter arms when said intermittently used chain-links are not used for STATCOM operation, wherein each intermittently usable chain-link is configured to be used for STATCOM operation during a time period within said fundamental operation cycle and configured not to be used for STATCOM operation during another time period within said fundamental operation cycle.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1a is a schematic circuit diagram of a STATCOM topology, usable in embodiments of the present invention.
Fig 1b is a schematic circuit diagram of a STATCOM topology, usable in embodiments of the present invention.
Fig 1c is a schematic circuit diagram of a STATCOM topology, usable in embodiments of the present invention.
Fig 1d is a schematic circuit diagram of a STATCOM delta topology, usable in embodiments of the present invention.
Fig 1e is a schematic circuit diagram of a STATCOM wye topology, usable in embodiments of the present invention.
Fig 2 is a schematic circuit diagram of a full-bridge converter cell, usable in embodiments of the present invention.
Fig 3 is a schematic circuit diagram of a STATCOM arrangement comprising a STATCOM and an ES, in accordance with embodiments of the present invention.
Fig 4a is a schematic circuit diagram of a full-bridge converter cell with integrated ES switches, usable in embodiments of the present invention.
Fig 4b is a schematic circuit diagram of a converter arm comprising converter cells of figure 4a and connected to an ES, usable in embodiments of the present invention.

### DETAILED DESCRIPTION

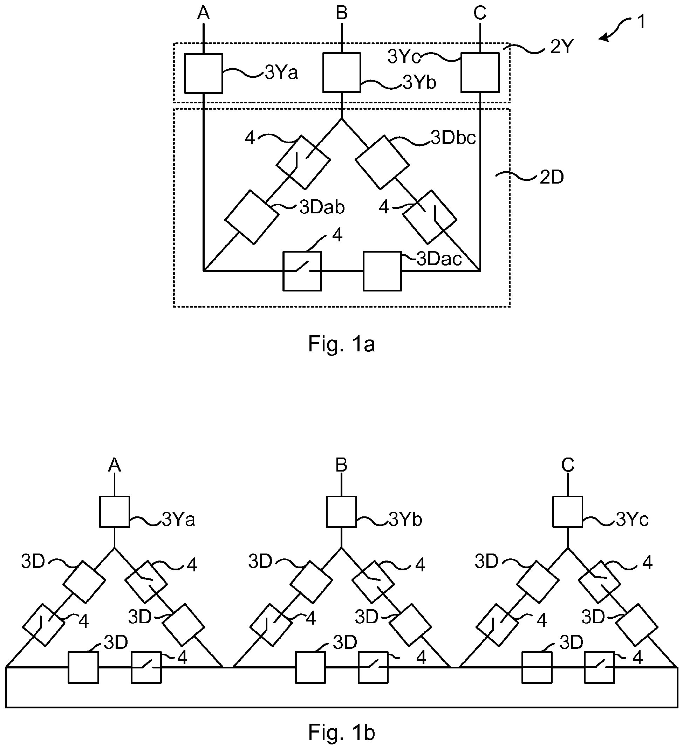

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description. Figure 1a illustrates a topology of a STATCOM 1, comprising a plurality of converter arms 3, in the form of a Modular Multilevel Converter (MMC) which can be used for the STATCOM arrangement of the present invention. The STATCOM 1 comprises a delta (Δ) configuration 2D and a wye (Y, also called star) configuration 2_{Y}, connected between the delta configuration and the phases A, B and C of a three-phase AC grid.

The wye configuration 2_{Y} comprises a plurality of wye arms 3_{Y} of the plurality of converter arms 3, one per phase of the grid, each having a first end which is connectable to a respective phase of the grid, such that a first wye arm 3_{Ya} is connectable to the first phase A, a second wye arm 3_{Yb} is connectable to the second phase B and a third wye arm 3_{Yc} is connectable to the third phase C. The other (second) end of each wye arm is connected to a respective corner point (terminal) of the delta configuration 2_{D}.

The delta 2_{D} configuration comprises three delta arms 3_{D} of the plurality of converter arms 3, a respective terminal of the delta configuration being formed between each two of the delta arms (figuratively, at each of the three corner points of the delta form). Each terminal of the delta configuration is connected to a respective phase A, B or C via a respective wye arm 3_{Y}, as described above. A circuit breaker 4 is connected in series with each delta arm 3_{D}, enabling the delta arm to be electrically disconnected from the delta configuration, and thus from the STATCOM operation, when the breaker 4 is open (e.g. turned off or otherwise non-conducting).

Herein the reference numeral 4 is defined as a circuit breaker, but this is merely an example since it could alternatively be e.g. a semiconductor switch such as a series-connected BCT.

The topology of the STATCOM 1 is such that at any point in time during STATCOM operation, one of the three delta arms 3_{D} is disconnected by means of its series connected breaker 4 being open. Over a fundamental operation cycle (i.e. corresponding to a sine wave period of a fundamental line voltage of any of the phases A, B or C) the delta arms are sequentially disconnected one-by-one such that one of them is always disconnected at any given time, but all are also used (connected) for the STATCOM operation during each operation cycle when not disconnected. These delta arms 3_{D} are examples of what are herein called intermittently used/usable converter arms.

Figure 1b illustrates another example embodiment of a topology of a STATCOM 1, similar to that of figure 1a and also usable in the embodiments of the present invention. The STATCOM comprises three wye arms 3Y as of the embodiment of figure 1a, and a delta configuration interconnecting the wye arms. However, the topology of figure 1b comprises a delta connecting circuit arranged between each wye leg and the interconnecting delta configuration. This is another topology in which a (at least one) delta arm 3_{D} is always unused during STATCOM operation.

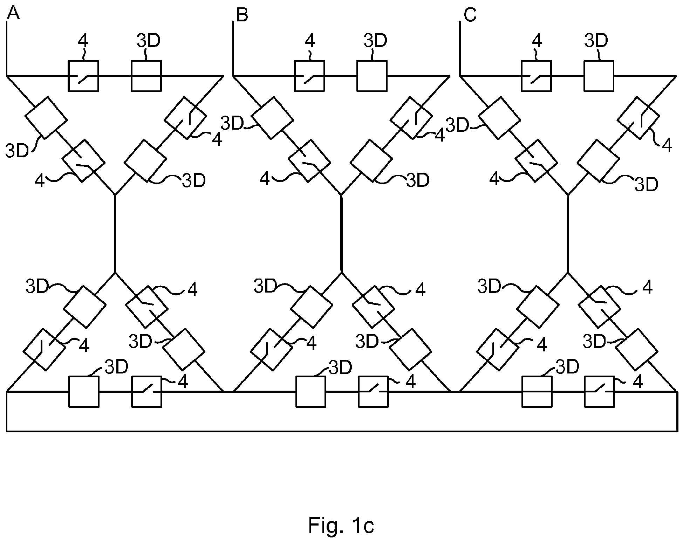

Figure 1c illustrates another example embodiment of a topology of a STATCOM 1, similar to that of figure 1b and also usable in the embodiments of the present invention. Here each of the wye arms is exchanged for a delta connecting circuit. This is another topology in which a (at least one) delta arm 3_{D} is always unused during STATCOM operation.

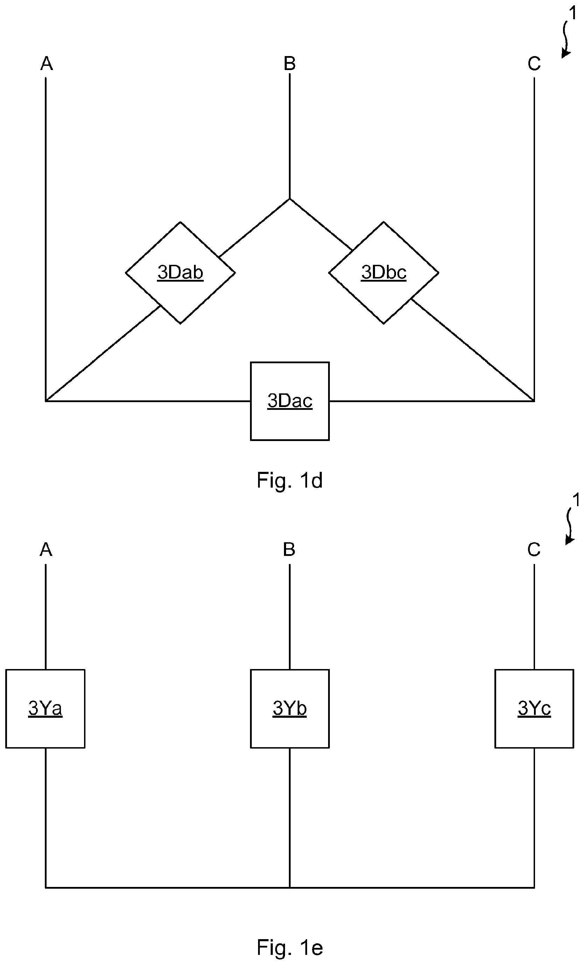

Figures 1d and 1e illustrate more traditional STATCOM topologies, where the number of converter arms 3 are the same as the number of grid phases, i.e. three in these examples. For these topologies, whole arms 3 are not intermittently used, but chain-link parts of the arms may be unused for STATCOM operation during predefined time periods.

Figure 1d illustrates a delta connected STATCOM 1 having three converter arms 3 in delta configuration, 3_{Dab}, 3_{Dbc} and 3_{Dac}, connected between the three phases A, B and C.

Figure 1e illustrates a wye connected STATCOM 1 having three converter arms 3 in wye configuration, 3_{Ya}, 3_{Yb} and 3_{Yc}, connected to each of the phases A, B and C.

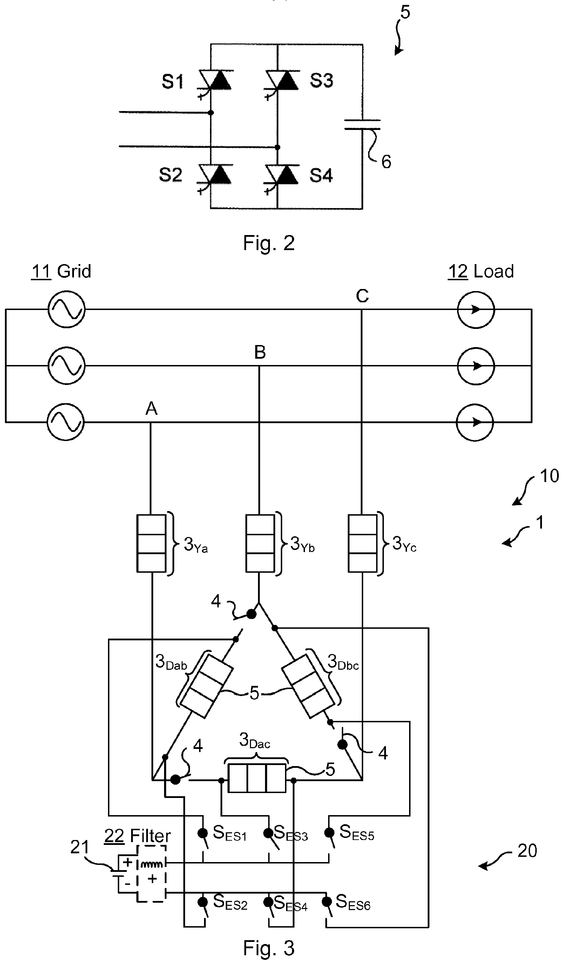

Figure 2 illustrates an embodiment of a converter cell 5 usable in the embodiments of the present invention. Each converter arm 3, e.g. those illustrated in any of figures 1a, 1b and 1c, comprises a plurality of series-connected (also called chain-linked or cascaded) converter cells 5. The converter cells may have any conventional topology, e.g. comprising a half-bridge (HF, mono-polar) topology or a full-bridge (FB, bi-polar, H-bridge) topology. For a STATCOM 1, at least some of the converter cells 5 in each converter arm 3 are typically FB cells, as shown in figure 2. The converter cell 5 comprises an energy storage 6, e.g. comprising a capacitor arrangement with at least one capacitor. A plurality of converter valves S are connected across the energy storage. For a FB cell 5, four converter valves S1-S4 are arranged in a full-bridge topology in two valve legs in parallel across the energy storage, each valve leg having two series connected valves S, in a conventional manner. Each valve may comprise a semiconductor switch, e.g. an Insulated-Gate Bipolar Transistor (IGBT) or an Integrated Gate-Commutated Thyristor (IGCT), and an antiparallel diode.

One way of providing both reactive and active power support with current STATCOM solutions can be to have an energy storage connected through a power electrical converter to the grid in parallel with the STATCOM. However, the conversion system for the connection of the energy storage would require additional components such as the DC/AC converter (a 2L in the simplest case), line reactors, output filter etc. Furthermore, the voltage string of the energy storage can only be reduced by stepping down the voltage with a transformer at the AC side, or by DC/DC conversion on the DC side.

In accordance with the present invention, an energy storage is integrated with a STATCOM topology, taking advantage of the fact that not all the cells 5 of a STATCOM 1 are in operation at any given time. As a result of this, a group of cells 5 (chain) or entire arms 3 can be used as multilevel DC/DC converters in parallel with an ES system, thereby avoiding the need of additional ES installation separated from the STATCOM. Furthermore, thanks to the multilevel property of a Chain Link, small filtering components on the energy storage side are needed, and the use of lower voltage ES string is potentially enabled.

Embodiments are applicable to different STATCOM topologies (including traditional Delta Chain-Link), provided that a group of cells 5 can be disconnected from the regular STATCOM operation without altering its operation (i.e. by disconnecting and bypassing). As not all the cells of a Chain-Link are needed to provide the voltage reference at a certain instant in time, those unused cells can be disconnected from the STATCOM and connected to the ES within the fundamental period. Herein, embodiments of the invention are exemplified with a Wye-Delta Chain Link converter topology as in figure 1a, which is further described in WO 2017/140357, because its operation already implies that a whole arm 3D in the Delta-block 2D is disconnected at any given time.

A key aspect in this case is that the converter energy stored in the cell capacitors 6 does not have to increase because of the added active power support functionality, since the cells 5 are already designed to handle more energy variation than the one presents in nominal conditions, in order for the STATCOM to be able to handle the fault scenarios. As a result of this, without over-dimensioning of the cell capacitor, the active power the STATCOM is able to provide (in this specific case, chosen as a good active/reactive power ratio) is up to 0.3 p.u. of the converter rated power.

Figure 3 illustrates a STATCOM arrangement 10 comprising an Energy Storage System (ESS) 20 comprising an ES 21 which is integrated with a STATCOM 1, also comprised in the STATCOM arrangement 10, e.g. a STATCOM of the topology of figure 1a. The STATCOM arrangement 10 is connected to a three-phase AC grid 11, servicing a load 12. In this case the arm switches 4 may represent bi-directional switches of the Delta-block 2D of the STATCOM 1, while the energy storage (ES) switches S_{ES} (typically also with bi-directional blocking capability) are comprised in the energy storage system (ESS) 20 and enable the ES 21 of the ESS 20 to be connected across either of the delta arms 3_{D} of the STATCOM 1. When an active power support is provided by the STATCOM 1, the ES 21 can always connected to one arm 3_{D} of the Delta-block 2_{D} of the STATCOM 1, which is only intermittently used for STATCOM operation. Furthermore, the arm 3_{D} connected to the ES 21 can be responsible for the control of current flowing in and out the ESS 20. For this reason, the current to the ES 21 may have only little disturbance which in turns results in small filtering components 22 on the DC side.

It may also be noted that the rated voltage of the ES 21 may not be constrained by the grid voltage whatsoever, and there may be no need for a DC/DC converter on the ES side, since the conversion property of the Chain-Link arm 3_{D} is used.

For a different STATCOM topology, e.g. one of those of figures 1b and 1c, the ES switches S_{ES} of the ESS 20 are suitably arranged to allow the ES 21 to be connected across, and thus via, each and any one of delta arms 3_{D} which is only intermittently used for the STATCOM operation. Similarly, for a STATCOM topology of e.g. any of figures 1d and 1e, the ES switches S_{ES} of the ESS 20 are suitably arranged to allow the ES 21 to be connected across, and thus via, each and any one of intermittently used chain-link parts of the converter arms 3 instead of chain-links constituting respective whole converter arms.

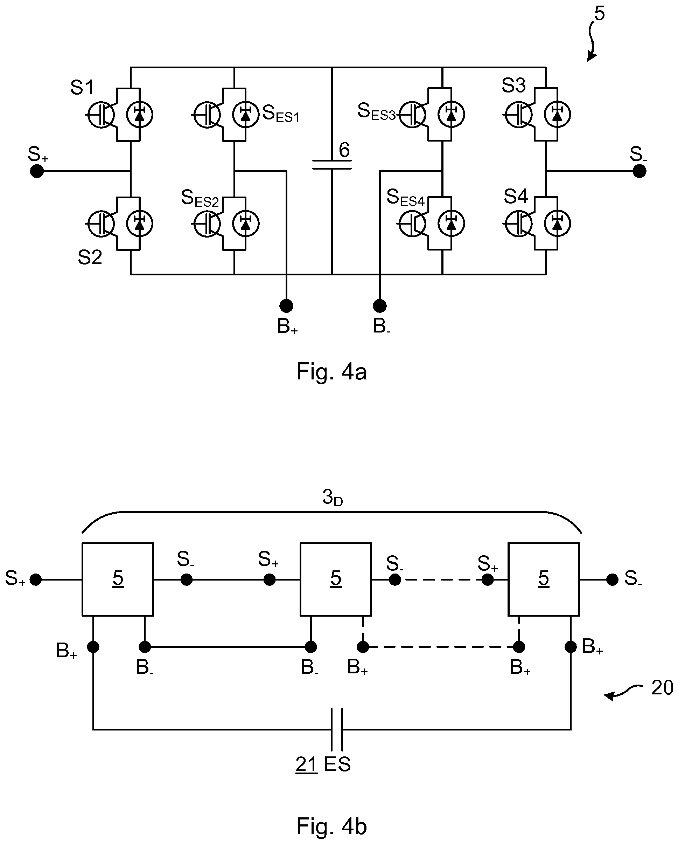

Figures 4a and 4b illustrate another design for integration of the ES 21 in the STATCOM arrangement 10, where ES switches S_{ES} are integrated in each cell 5 of each intermittently usable chain-link, e.g. arm 3 or part thereof (here delta arms 3_{D}). Thus, each cell 5 comprises, in addition to the regular converter valves S1-S4, an additional FB topology of ES switches S_{ES1}-S_{ES4} enabling the cell to be connected as a power electronic interface to the ES 21 via respective positive and negative ES terminals B₊ and B₋ (in addition to the regular positive and negative STATCOM terminals S₊ and S₋ used when the cell us used for regular STATCOM operation).

The topology of figures 4a and 4b may be without the need of bi-directional switches. The STATCOM terminals S₊ and S₋ of the cell 5 are connected in series to form the STATCOM chain-link arm 3_{D}, while the ES terminals B₊ and B₋ are connected in series and connected to the ES 21. During regular STATCOM operation, the ES switches S_{ES} are all off (non-conducting), effectively providing a bi-directional blocking capability against the ES 21, while the valves S1-S4 operate as a full bridge following the control of the STATCOM. When active power needs to flow to or from the grid 11, the ES switches S_{ES} are operated in those periods of times when the arm 3_{D} is disconnected from the other arms 3 of the STATCOM 1 (in this topology, this may happen twice per fundamental cycle for a π/6 angle interval each). During this periods, the valves S1-S4 can be opened (non-conducting), again providing the bi-directional disconnection of the cells 5 from the rest of the STATCOM, while the ES switches S_{ES} are modulated to control the DC current flowing out from or into the ES 21. It may be noted that in the case of a cell topology as in figure 4a, the valves S1-S4 will have to be rated to sustain double the voltage of the cell capacitor 6, in order to block the maximum voltage generated by the two other connected arms during the STATCOM operation. It should be noticed that, in order not to have a large overrating of the cell switches, it may be important to have a staircase modulation so that the voltage blocked by the arm 3 can be shared across all the switches, i.e. the ES voltage could be such to match the sum of the cell voltages leaving only to a few cells the possibility to be inserted and bypassed for controlling the DC current flowing to the ES 21.

It may also be possible to subdivide the Chain-Link arm 3_{D} across which the ES 21 is connected in order to lower the voltage of the ES, having a mix of cells 5 only made up of the regular four valves S1-S4 and other cells 5 with also the ES switches and thus the connection to the ES 21. Also, it may be possible to have several ES blocks in parallel, each of them sharing the power between the three delta arms 3_{D}, potentially increasing the redundancy and lowering the voltage rating of the overall ES system.

In each of the cases, the ES 21 would be connectable across each of the three arms 3_{D} of the delta block, in order to enable having a continuous current flowing in and out the ES 21.

In some embodiments of the present invention, each of three of the intermittently usable chain-links corresponds to a respective of the converter arms 3_{D} connected in a delta configuration 2_{D}. In such cases, the energy storage switches S_{ES} may be configured to enable the ES 21 to sequentially be connected to each of the delta connected intermittently usable converter arms 3_{D} over a fundamental operation cycle of the STATCOM 1. In some embodiments, the plurality of converter arms 3 comprises a first, a second and a third wye-connected converter arm 3_{Y}, each at a first end connected with the delta configuration 2_{D} and at a second end connectable to the grid 11, whereby a first wye-connected converter arm 3_{Ya} is configured to be connected to a first phase A of the grid, a second wye-connected converter arm 3_{Yb} is configured to be connected to a second phase B of the grid, and a third wye-connected converter arm 3_{Yc}, is configured to be connected to a third phase C of the grid.

In some other embodiments of the present invention, each of the intermittently usable chain-links corresponds to a part of a respective converter arm 3, comprising less than all of the converter cells 5 of said converter arm.

In some embodiments of the present invention, the energy storage switches S_{ES} are integrated in each of the converter cells 5 of each of the intermittently usable chain-links. In some embodiments, the energy storage switches S_{ES} in each cell 5 are in two energy storage switch legs, connected in parallel across an energy storage 6 of the cell, each energy storage switch leg comprising two series connected energy storage switches.

In some other embodiments of the present invention, the method step of in sequence connecting the ES to the grid via each of a plurality of intermittently used chain-links comprises in sequence opening a respective circuit breaker 4, or similar device e.g. a semiconductor switch such as a series-connected BCT, in series with said each plurality of intermittently used chain-links, electrically disconnecting the chain-link from the STATCOM, and closing the circuit breaker whereby the chain-link is electrically reconnected to the STATCOM.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A STATCOM arrangement (10) comprising:
a Static Synchronous Compensator, STATCOM, (1) power electronic converter configured to be connected to a three-phase AC grid (11), the STATCOM comprising a plurality of converter arms (3), each converter arm comprising a plurality of series connected converter cells (5); and
an Energy Storage System, ESS, (20) comprising an energy storage, ES, (21) and energy storage switches (S_{ES}) enabling the ES to be connected to the AC grid (11) via the converter arms;
wherein said plurality of converter arms comprises a plurality of intermittently usable chain-links of the series connected converter cells (5), wherein each intermittently usable chain-link is configured to be used for STATCOM operation during a time period within a fundamental operation cycle of a line voltage of the AC grid;
**characterized in that**
each intermittently usable chain link is further configured not to be used for STATCOM operation during another time period within said fundamental operation cycle; and
wherein the energy storage switches are configured to enable the ES to at any point in time be connected to the AC grid via one of the intermittently usable chain-links which is not used for the STATCOM operation at said point in time.

2. The arrangement of claim 1, wherein each of three of the intermittently usable chain-links corresponds to a respective of the converter arms (3_{D}) connected in a delta configuration (2_{D}), and wherein the energy storage switches (S_{ES}) enable the ES (21) to sequentially be connected to each of the delta connected intermittently usable converter arms (3_{D}) over a fundamental operation cycle of the line voltage of the AC grid.

3. The arrangement of claim 2, wherein the plurality of converter arms (3) comprises a first, a second and a third wye-connected converter arm (3_{Y}), each at a first end connected with the delta configuration (2_{D}) and at a second end connectable to the grid (11), whereby a first wye-connected converter arm (3_{Ya}) is configured to be connected to a first phase (A) of the grid, a second wye-connected converter arm (3_{Yb}) is configured to be connected to a second phase (B) of the grid, and a third wye-connected converter arm (3_{Yc}) is configured to be connected to a third phase (C) of the grid.

4. The arrangement of claim 1, wherein each of the intermittently usable chain-links corresponds to a part of a respective converter arm (3), comprising less than all of the converter cells (5) of said converter arm.

5. The arrangement of any preceding claim, wherein the energy storage switches (S_{ES}) are integrated in each of the converter cells (5) of each of the intermittently usable chain-links.

6. The arrangement of claim 5, wherein the energy storage switches (S_{ES}) in each cell (5) are in two energy storage switch legs, connected in parallel across an energy storage (6) of the cell, each energy storage switch leg comprising two series connected energy storage switches.

7. A method of connecting an energy storage, ES, (21) to a three-phase AC grid (11) via a Static Synchronous Compensator, STATCOM, (1) power electronic converter, the STATCOM comprising a plurality of converter arms (3), each converter arm comprising a plurality of series connected converter cells (5), the method comprising:
over a fundamental operation cycle of a line voltage of the AC grid, by means of energy storage switches (S_{ES}), in sequence connecting the ES to the AC grid via each of a plurality of intermittently used chain-links of the series connected converter cells (5) of the plurality of converter arms when said intermittently used chain-links are not used for STATCOM operation,
wherein each intermittently usable chain-link is configured to be used for STATCOM operation during a time period within said fundamental operation cycle and configured not to be used for STATCOM operation during another time period within said fundamental operation cycle.

8. The method of claim 7, wherein the in sequence connecting the ES to the AC grid via each of a plurality of intermittently used chain-links comprises in sequence opening a respective circuit breaker (4) in series with said each plurality of intermittently used chain-links, electrically disconnecting the chain-link from the STATCOM, and closing the circuit breaker whereby the chain-link is electrically reconnected to the STATCOM.

## Patentansprüche

1. STATCOM-Anordnung (10) umfassend:
einen leistungselektronischen statischen Synchronkompensator-, STATCOM-, (1) Umrichter, der dazu ausgelegt ist, an ein dreiphasiges Wechselstromnetz (11) angeschlossen zu werden, wobei der STATCOM eine Mehrzahl von Umrichterarmen (3) umfasst, wobei jeder Umrichterarm eine Mehrzahl von in Reihe geschalteten Umrichterzellen (5) umfasst; und
ein Energiespeichersystem, ESS, (20), das einen Energiespeicher, ES, (21) und Energiespeicherschalter (S_{ES}) umfasst, die es dem ES ermöglichen über die Umrichterarme an das Wechselstromnetz (11) angeschlossen zu werden;
wobei die Mehrzahl von Umrichterarmen eine Mehrzahl von intermittierend nutzbaren Kettengliedern der in Reihe geschalteten Umrichterzellen (5) umfasst, wobei jedes intermittierend nutzbare Kettenglied dazu ausgelegt ist, für den STATCOM-Betrieb während einer Zeitspanne innerhalb eines Grundbetriebszyklus einer Leitungsspannung des Wechselstromnetzes verwendet zu werden;
**dadurch gekennzeichnet, dass** jedes intermittierend nutzbare Kettenglied ferner dazu ausgelegt ist, während einer anderen Zeitspanne innerhalb des Grundbetriebszyklus nicht für den STATCOM-Vorgang verwendet zu werden; und
wobei die Energiespeicherschalter dazu ausgelegt sind, es dem ES zu ermöglichen, zu jedem Zeitpunkt über einen der intermittierend nutzbaren Kettenglieds, der zu diesem Zeitpunkt nicht für den STATCOM-Vorgang verwendet wird, an das Wechselstromnetz angeschlossen zu werden.

2. Anordnung nach Anspruch 1, wobei jedes von drei der intermittierend nutzbaren Kettenglieder einem jeweiligen der in einer Dreieckskonfiguration (2_{D}) geschalteten Umrichterarme (3_{D}) entspricht, und wobei die Energiespeicherschalter (S_{ES}) es dem ES (21) ermöglichen über einen Grundbetriebszyklus der Netzspannung des Wechselstromnetzes sequenziell an jeden der im Dreieck geschalteten, intermittierend nutzbaren Umrichterarme (3_{D}) angeschlossen zu werden.

3. Anordnung nach Anspruch 2, wobei die Mehrzahl von Umrichterarmen (3) einen ersten, einen zweiten und einen dritten Stern-angeschlossenen Umrichterarm (3_{Ya}) umfasst, die jeweils an einem ersten Ende mit der Dreieckskonfiguration (2_{D}) angeschlossen ist und an einem zweiten Ende mit dem Netz (11) anschließbar ist, wobei ein erster Stern-angeschlossener Umrichterarm (3_{Ya}) dazu ausgelegt ist, an eine erste Phase (A) des Netzes angeschlossen zu werden, ein zweiter Stern-angeschlossener Umrichterarm (3_{Yb}) dazu ausgelegt ist, an eine zweite Phase (B) des Netzes angeschlossen zu werden, und ein dritter Stern-angeschlossener Umrichterarm (3_{Yc}) dazu ausgelegt ist, an eine dritte Phase (C) des Netzes angeschlossen zu werden.

4. Anordnung nach Anspruch 1, wobei jedes der intermittierend nutzbaren Kettenglieder einem Teil eines jeweiligen Umrichterarms (3) entspricht, der weniger als alle Umrichterzellen (5) des Umrichterarms umfasst.

5. Anordnung nach einem der vorhergehenden Ansprüche, wobei die Energiespeicherschalter (S_{ES}) in jede der Umrichterzellen (5) jedes der intermittierend nutzbaren Kettenglieder integriert sind.

6. Anordnung nach Anspruch 5, wobei die Energiespeicherschalter (S_{ES}) in jeder Zelle (5) in zwei Energiespeicherschalterbeinen angeordnet sind, die parallel zu einem Energiespeicher (6) der Zelle geschaltet sind, wobei jedes Energiespeicherschalterbein zwei in Reihe geschaltete Energiespeicherschalter umfasst.

7. Verfahren zum Anschließen eines Energiespeichers, ES, (21) an ein dreiphasiges Wechselstromnetz (11) über einen leistungselektronischen statischen Synchronkompensator-, STATCOM-, (1), Umrichter, wobei der STATCOM eine Mehrzahl von Umrichterarmen (3) umfasst, wobei jeder Umrichterarm eine Mehrzahl von in Reihe geschalteten Umrichterzellen (5) umfasst, wobei das Verfahren umfasst:
über einen Grundbetriebszyklus einer Leitungsspannung des Wechselstromnetzes mit Hilfe von Energiespeicherschaltern (S_{ES}) nacheinander die ES an das Wechselstromnetz über jede einer Mehrzahl von intermittierend verwendeten Kettengliedern der in Reihe geschalteten Umrichterzellen (5) der Mehrzahl von Umrichterarmen anschließen, wenn die intermittierend verwendeten Kettenglieder nicht für den STATCOM-Betrieb verwendet werden, wobei jedes intermittierend verwendbare Kettenglied dazu ausgelegt ist, während einer Zeitspanne innerhalb des Grundbetriebszyklus für den STATCOM-Betrieb verwendet zu werden und dazu ausgelegt ist, während einer anderen Zeitspanne innerhalb des Grundbetriebszyklus nicht für den STATCOM-Betrieb verwendet zu werden.

8. Verfahren nach Anspruch 7, wobei das sequenzielle Anschließen des ES an das Wechselstromnetz über jeden einer Mehrzahl von intermittierend verwendeten Kettengliedern das sequenzielle Öffnen eines jeweiligen Leistungsschalters (4) in Reihe mit der jeweiligen Mehrzahl von intermittierend verwendeten Kettengliedern, das elektrische Trennen des Kettenglieds vom STATCOM und das Schließen des Leistungsschalters umfasst, wodurch das Kettenglied elektrisch wieder an den STATCOM angeschlossen wird.

## Revendications

1. Agencement STATCOM (10) comprenant :
un convertisseur électronique de puissance à compensateur synchrone statique, STATCOM, (1) configuré pour être connecté à un réseau CA triphasé (11), le STATCOM comprenant une pluralité de bras de convertisseur (3), chaque bras de convertisseur comprenant une pluralité de cellules de convertisseur connectées en série (5) ; et
un système de stockage d'énergie, ESS, (20) comprenant un stockage d'énergie, ES, (21) et des commutateurs de stockage d'énergie (S_{ES}) permettant à l'ES d'être connecté au réseau CA (11) via les bras de convertisseur ;
ladite pluralité de bras de convertisseur comprenant une pluralité de maillons de chaîne utilisables de manière intermittente des cellules de convertisseur connectées en série (5), chaque maillon de chaîne utilisable de manière intermittente étant configuré pour être utilisé pour un fonctionnement STATCOM pendant une période de temps dans un cycle de fonctionnement fondamental d'une tension de ligne du réseau CA ;
**caractérisé en ce que** chaque maillon de chaîne utilisable de manière intermittente est en outre configuré pour ne pas être utilisé pour le fonctionnement STATCOM pendant une autre période de temps dans ledit cycle de fonctionnement fondamental ; et
les commutateurs de stockage d'énergie étant configurés pour permettre à l'ES, à n'importe quel instant, d'être connecté au réseau CA via un des maillons de chaîne utilisables de manière intermittente qui n'est pas utilisé pour le fonctionnement STATCOM audit instant.

2. Agencement selon la revendication 1, chacun de trois des maillons de chaîne utilisables de manière intermittente correspondant à un bras respectif des bras de convertisseur (3_{D}) connectés dans une configuration en triangle (2_{D}), et les commutateurs de stockage d'énergie (S_{ES}) permettant à l'ES (21) d'être connecté séquentiellement à chacun des bras de convertisseur (3_{D}) utilisables de manière intermittente connectés en triangle sur un cycle de fonctionnement fondamental de la tension de ligne du réseau CA.

3. Agencement selon la revendication 2, la pluralité de bras de convertisseur (3) comprenant un premier, un deuxième et un troisième bras de convertisseur connecté en étoile (3_{Y}), chacun à une première extrémité étant connecté à la configuration en triangle (2_{D}) et à une deuxième extrémité pouvant être connecté au réseau (11), moyennant quoi un premier bras de convertisseur connecté en étoile (3_{Ya}) étant configuré pour être connecté à une première phase (A) du réseau, un deuxième bras de convertisseur connecté en étoile (3_{Yb}) étant configuré pour être connecté à une deuxième phase (B) du réseau, et un troisième bras de convertisseur connecté en étoile (3_{Yc}) étant configuré pour être connecté à une troisième phase (C) du réseau.

4. Agencement selon la revendication 1, chacun des maillons de chaîne utilisables de manière intermittente correspondant à une partie d'un bras de convertisseur (3) respectif, comprenant moins que toutes les cellules de convertisseur (5) dudit bras de convertisseur.

5. Agencement selon l'une quelconque des revendications précédentes, les commutateurs de stockage d'énergie (S_{ES}) étant intégrés dans chacune des cellules de convertisseur (5) de chacun des maillons de chaîne utilisables de manière intermittente.

6. Agencement selon la revendication 5, les commutateurs de stockage d'énergie (S_{ES}) dans chaque cellule (5) étant dans deux jambes de commutateurs de stockage d'énergie, connectées en parallèle d'un stockage d'énergie (6) de la cellule, chaque jambe de commutateur de stockage d'énergie comprenant deux commutateurs de stockage d'énergie connectés en série.

7. Procédé de connexion d'un stockage d'énergie, ES, (21) à un réseau CA triphasé (11) via un convertisseur électronique de puissance à compensateur synchrone statique, STATCOM, (1), le STATCOM comprenant une pluralité de bras de convertisseur (3), chaque bras de convertisseur comprenant une pluralité de cellules de convertisseur connectées en série (5), le procédé comprenant :
sur un cycle de fonctionnement fondamental d'une tension de ligne du réseau CA, au moyen de commutateurs de stockage d'énergie (S_{ES}), la connexion en séquence de l'ES au réseau CA via chacun d'une pluralité de maillons de chaîne utilisés de manière intermittente des cellules de convertisseur connectées en série (5) de la pluralité de bras de convertisseur lorsque lesdits maillons de chaîne utilisés de manière intermittente ne sont pas utilisés pour un fonctionnement STATCOM, chaque maillon de chaîne utilisable de manière intermittente étant configuré pour être utilisé pour un fonctionnement STATCOM pendant une période de temps dans ledit cycle de fonctionnement fondamental et configuré pour ne pas être utilisé pour un fonctionnement STATCOM pendant une autre période de temps dans ledit cycle de fonctionnement fondamental.

8. Procédé selon la revendication 7, la connexion en séquence de l'ES au réseau CA via chacun d'une pluralité de maillons de chaîne utilisés de manière intermittente comprenant une ouverture en séquence d'un disjoncteur (4) respectif en série avec ladite chaque pluralité de maillons de chaîne utilisés de manière intermittente, la déconnexion électrique du maillon de chaîne du STATCOM, et la fermeture du disjoncteur, moyennant quoi le maillon de chaîne étant reconnecté électriquement au STATCOM.
